Europäisches Patentamt

European Patent Office

Office européen des brevets

(19)

(11) Publication number : **0 570 254 A1**

(12) # EUROPEAN PATENT APPLICATION

(21) Application number : 93401118.0

(22) Date of filing : 29.04.93

(51) Int. Cl.⁵ : **C09D 4/06, C08F 259/08**

(30) Priority : 30.04.92 US 876390

(43) Date of publication of application :
18.11.93 Bulletin 93/46

(84) Designated Contracting States :
DE FR GB IT

(71) Applicant : **MINNESOTA MINING AND
MANUFACTURING COMPANY
3M Center, P.O. Box 33427
St. Paul, Minnesota 55133-3427 (US)**

(72) Inventor : **Kumar, Ramesh C., c/o Minnesota
Mining and
Manufac. Company, 2501 Hudson Road, P.O.
Box 33427
St. Paul, Minnesota 55133-3427 (US)**
Inventor : **Lu, David D., c/o Minnesota Mining
and
Manufac. Company, 2501 Hudson Road, P.O.
Box 33427
St. Paul, Minnesota 55133-3427 (US)**
Inventor : **Smolders, Robert R., c/o Minnesota
Mining and
Manufac. Company, 2501 Hudson Road, P.O.
Box 33427
St. Paul, Minnesota 55133-3427 (US)**

(74) Representative : **Warcoin, Jacques et al
Cabinet Régimbeau 26, avenue Kléber
F-75116 Paris (FR)**

(54) Ultraviolet radiation curable stain resistant protective coating compositions for vinyl substrates.

(57)     The present invention provides a stain-resistant protective coating composition comprising :
   (a) about 50 to about 5 weight percent of acrylic monomer having at least 2 ethylenically unsaturated groups ;
   (b) about 5 to about 50 weight percent of a fluorocarbon elastomer having a number average molecular weight of about 3,000 to about 150,000 ;
   (c) about 1 to about 5 weight percent of a photoinitiator ; and
   (d) about 0 to about 44 weight percent of an organic solvent in which the fluorocarbon elastomer is soluble ;
      wherein the weight percentages are based upon the total weight of said stain-resistant protective coating composition. The invention also provides stain-resistant protective coatings prepared therefrom and vinyl substrates having such a coating.

EP 0 570 254 A1

## Field of Invention

This invention relates to a protective coating composition which can be applied to a vinyl substrate, particularly vinyl flooring, and cured upon exposure to ultraviolet radiation in order to form a flexible coating which provides good stain resistance.

## Background of the Invention

Vinyl flooring manufacturers typically apply a "no-wax" topcoating to the vinyl flooring in order to protect the flooring from wear, abrasion, and stains and to provide flooring which exhibits and retains a highly glossy appearance. Manufacturers have used solvent-based coatings such as one-part or two-part polyurethanes, waterborne coatings such as cross-linked polyurethanes, and radiation-cured 100% reactive systems such as acrylated urethanes to achieve no-wax finishes with a balance of desired characteristics.

Waterborne coatings, although desirable from an ecological viewpoint, require extended heated production lines to allow the coating to dry before further processing. Thus, high-speed production is difficult, both practically and economically.

Solvent-based polyurethane coatings have been used extensively in the industry. Urethanes based on polyisocyanates and polyols are crosslinked thermally or are moisture-cured in air. For many of these systems, a significant amount of energy is required to evaporate the solvents as well as to collect and dispose of them in an ecologically sound manner.

Radiation-curable acrylated polyurethanes are well-known, providing increased production efficiency due to rapid cure rates and reduced costs due to lack of need for solvent handling and pollution control. U.S. Patent No. 4,100,318 (assigned to Dowdflor Corp.) describes acrylated polyurethanes prepared from polyester-urethane dienes and multifunctional acrylates that are useful topcoats for vinyl flooring materials.

While polyurethane topcoats are well-known for their wear and abrasion resistance, their resistance to stains is not noteworthy. Topcoats for flooring which comprise fluorochemicals are not known.

Many attempts have been made to modify the physical properties of vinylidene fluoride homo- and co-polymers by means of dry blending and copolymerization with monomers of lower glass transition temperatures. In general, such attempts have been commercially unsuccessful. An alternate method of intermixing two otherwise incompatible polymers is to mix or dissolve an already-formed polymer into a monomer, after which the monomer is polymerized such that an intimate mixture of the two polymers is formed. U.S. Patent No. 3,676,192 (assigned to PPG Industries, Inc.) describes the formation of protective coatings for wood, steel or aluminum via dissolution of polyvinyl chloride or polyvinylidene fluoride in a multifunctional acrylate monomer, after which the monomer is polymerized via high-energy ionizing radiation. European Patent No. 390,207 (assigned to Daikin Industries, Ltd.) describes formation of a vibration-damping material by dissolving fluorine-containing polymers in (meth)acrylate monomers, followed by coating the resultant syrups onto appropriate substrates, then curing the monomers by either thermal or photochemical means. U.S. Patent No. 5,006,593 (assigned to E. I. duPont) describes the thermal polymerization of a mixture of acrylate monomers in which poly(vinylidene fluoride) powder has been dissolved to produce materials suitable for automobile, industrial or aeronautic coatings. None of the above-mentioned references is concerned with stain-resistant coatings for vinyl floor coverings, and such uses are not claimed or taught therein.

A need thus exists for a protective coating for vinyl substrates which is flexible, which provides good stain resistance, which provides a plasticizer barrier coating, and which is ultraviolet radiation curable. We have found such a coating.

## Brief Description of the Invention

We have discovered a novel stain-resistant protective coating composition which upon cure yields a flexible, plasticizer barrier coating having superior stain resistance without deleteriously affecting the gloss of the substrate upon which it is coated.

The present invention provides a radiation-curable fluoroelastomer/multifunctional acrylate system with superior stain resistance, flexibility and which acts as a barrier to plasticizer migration.

The stain-resistant protective coating composition comprises a mixture of:

(a) about 50 to about 5 weight percent of acrylic monomer having at least 2 ethylenically unsaturated groups;

(b) about 5 to about 50 weight percent of a fluorocarbon elastomer having a number average molecular weight of about 2,500 to about 150,000;

(c) about 1 to about 5 weight percent of a photoinitiator; and

(d) about 0 to about 44 weight percent of an organic solvent in which the fluorocarbon elastomer and the acrylic monomer is soluble;

wherein the weight percentages are based upon the total weight of the stain-resistant protective coating composition.

Another aspect of the invention relates to the stain-resistant protective coating comprising the cured stain-resistant protective coating composition.

Another aspect of the invention relates to a vinyl substrate coated with the stain-resistant protective coating of the invention.

## Detailed Description of the Invention

### Fluorocarbon Elastomers

The term "fluoroelastomer" as used herein refers to fluorinated elastomers. Fluorinated elastomers are a class of synthetic elastomers that are designed for demanding service applications in environments where combinations of extreme temperature ranges, chemicals, fluids, and/or fuels exist. The three basic fluorinated elastomer types are fluorocarbons, fluorosilicones, and fluoroalkoxy phosphazines. This invention involves the use of fluorocarbon elastomers.

Fluorocarbon elastomers are based primarily on vinylidene fluoride ($CH_2=CF_2$) and hexafluoropropylene ($C_3F_6$). The Fluorel® Brand fluorocarbon elastomers, which are useful in the present invention (available from 3M Company) are produced using approximately a 4 to 1 (vinylidene fluoride to hexafluoropropylene) ratio of the monomers. The VITON fluorocarbon elastomers, which are also useful according to the present invention, (available from duPont) are available in similar composition or with increased fluorine content via use of tetrafluoroethylene ($C_2F_4$) for improved fluid resistance or with perfluoromethylvinyl ether ($C_2F_4OCF_3$) for better low temperature properties. The raw fluorocarbon elastomers have a density of 1.80 to 1.86 mg/m³.

The Kirk-Othmer Encyclopedia of Chemical Technology, Vol. 8, pp. 500-515, Table 1, 3rd Edition, John Wiley & Sons, 1981), lists examples of useful commercially available fluorocarbon elastomers including poly(vinylidene fluoride-co-hexafluoropropylene) available under the tradenames FLUOREL from 3M, Viton A from duPont, Tecnoflon from Montedison, and Dai-E1 from Daikin; poly(vinylidene fluoride-co-hexafluoropropylene-co-tetrafluorethylene) available under the tradenames Viton B from duPont, and Dai-E1 G-501 from Daikin; poly(vinylidene fluoride-co-hexafluoropropylene-co-tetrafluorethylene) plus cure site monomer available under the tradename Viton G (peroxide curable) from duPont; poly(vinylidene fluoride-co-tertrafluoroethylene-co-perfluoromethyl vinyl ether) plus cure site monomer available under the tradename Viton GLT (peroxide curable) from duPont; poly(tetrafluoroethylene-co-perfluoromethyl vinyl ether) plus cure site monomer available under the tradename Kalrez from duPont; poly(tetrafluoroethylene-co-propylene) available under the tradename Aflas 100, 150 from Asahi; poly(vinylidene fluoride-co-chlorotrifluoroethylene) available under the tradename Kel-F 3700 from 3M; poly(vinylidene fluoride-co-1-hydropentafluoropropylene) available under the tradename Tecnoflon SL from Montedison; and poly(vinylidene fluoride-co-1 hydropentafluoropropylene-co-tetrafluoroethylene) available under the tradename Tecnoflon T from Montedison.

The following U.S. Patents describe useful fluorocarbon elastomers for the purpose of this invention: U.S. Patent No. 3,051,677 (assigned to E.I. duPont de Nemours & Co., Inc.); U.S. Patent No. 2,968,649 (assigned to E. I. duPont de Nemours & Co., Inc.); U.S. Patent No. 3,331,823 (assigned to Montedison); U.S. Patent No. 3,335,106 (assigned to Montedison); U.S. Patent No. 3,712,877 (assigned to 3M); U.S. Patent No. 4,866,118 (assigned to 3M); and U.S. Patent No. 4,956,419 (assigned to 3M).

Preferably, the fluorocarbon elastomers used according to the invention comprise monomers selected from the group consisting of vinylidene fluoride, hexafluoropropylene, tetrafluoroethylene, chlorotrifluoroethylene, 2-chloropentafluoropropene, pentafluoropropene, dichlorodifluoroethylene, trifluoroethylene, 1-1-chlorofluoroethylene, 1-bromo-2,2-difluoroethylene, perfluoromethylvinyl ether and mixtures thereof, and optionally, in addition, such fluoromonomer cure site monomers such as 3-iodoperfluoropropene, 4-iodoperfluoropentene, bromotrifluoroethylene, bromodifluoroethylene and mixtures thereof, for reasons of commercial availability.

Useful fluorocarbon elastomers should have a number average molecular weight between about 2,500 and about 150,000, most preferably about 28,000 to about 80,000 for reasons of their solubility in multifunctional (meth)acrylates. If the molecular weight is below about 2,500 the stain resistant properties will not be obtained. If the molecular weight is above about 150,000, solubility in the multifunctional (meth)acrylate monomer will be reduced, and the resulting solution would exhibit excessively high coating viscosity.

The fluorocarbon elastomer does not have to be soluble in the multifunctional acrylic monomer, although it may be. The composition is preferably prepared by dissolving or dispersing the fluorocarbon elastomer into the multifunctional monomer, and then adding the photoinitiator. Optionally monofunctional acrylic monomer and/or an organic solvent are added to obtain a consistent and coatable syrup. Alternatively, if a solvent is included, a solution of fluorocarbon elastomer in an organic solvent such as methyl ethyl ketone is made following which multifunctional (meth)acrylate and photoinitiator are added in order to obtain the coating solution. The only limitation in the above described procedure is that the multifunctional (meth)acrylate should be completely miscible with and should not phase separate when added to the fluorocarbon elastomer solution.

The composition of the invention comprises about 10 to about 90 percent by weight fluorocarbon elastomer based upon the total weight of the composition, preferably about 15 to about 60 percent by weight, and most preferably about 40 to about 50 percent by weight for reasons of obtaining optimum stain resistant properties without deleteriously affecting the gloss.

## Multifunctional Acrylic Monomer

The term "acrylic monomer" as used herein refers to both acrylate esters and methacrylate esters. Acrylic monomers having at least two ethylenically unsaturated groups useful according to the invention include but are not limited to those selected from the group consisting of trimethylolpropane triacrylate (TMPTA); hexanediol diacrylate (HDDA); neopentylglycol diacrylate (NPGDA); trimethylolpropane ethoxy triacrylate (TMPEOTA); ditrimethylolpropane pentacrylate (DIPMPPA); polyethylene glycol 200 diacrylate; 1,4-butanediol dimethacrylate, 1,3-butanediol dimethacrylate, polyglycol 400 dimethacrylate, neopentyl glycol dimethacrylate, triethylene glycol dimethacrylate, ethylene glycol dimethacrylate, diethylene glycol dimethacrylate, tetraethylene glycol dimethacrylate, 1,12-dodecanediol dimethacrylate, and mixtures thereof.

The multifunctional acrylic monomer should have about 2 to about 6 ethylenically unsaturated groups (e.g. acrylate groups, methacrylate groups) preferably about 2 to about 4 ethylenically unsaturated groups in order to avoid making too brittle of a coating.

The composition of the invention comprises about 5 to about 50 percent by weight multifunctional monomer, based upon the total weight of the composition, preferably about 10 to about 45 percent by weight, most preferably about 20 to about 40 percent by weight for reasons of obtaining good stain resistant properties. If less than about 5 percent by weight multifunctional monomer is included the coating will be too elastomeric and complete curing may not be obtained. If greater than about 50 percent by weight multifunctional monomer is included satisfactory stain-resistant properties will not be obtained.

## Monofunctional Acrylic Monomer

It is believed that the composition of the invention can optionally further comprise up to about 50 percent by weight monofunctional acrylic monomer (i.e., acrylic monomer having one ethylenically unsaturated group) based upon the total weight of the composition, preferably, if used, about 5 to about 50 weight percent of monofunctional acrylic monomer; more preferably, if used, about 10 to about 20 weight percent; and most preferably, if used, about 5 to about 10 weight percent, for reasons of providing organic solvent resistance, improving gloss, and abrasion resistance.

The monofunctional monomer(s) preferably as a homopolymer have a Tg of greater than about 20°C in order to ensure that there is no tackiness to the resultant coating prepared from the coating compositions of the invention. Examples of useful monofunctional acrylic monomers include but are not limited to those selected from the group consisting of acrylic acid esters or methacrylic acid esters of alcohols such as methanol, ethanol, 1-propanol, 2-propanol, 1-butanol, 1,1-dimethyl ethanol, 2-methyl-1-propanol, 1-pentanol, 2-pentanol, 3-pentanol, 2-methyl-1-butanol, 3-methyl-1-butanol, 2-hexanol, 3-methyl-1-pentanol, cyclohexanol, 2-ethyl-1-butanol, 3-heptanol, benzyl alcohol, 2-octanol, 6-methyl-1-heptanol, 2-ethyl-1-hexanol, 3,5-dimethyl-1-hexanol, 3,5,5-trimethyl-1-hexanol, 1-decanol, 1-dodecanol, mixtures thereof, and the like, the alcohols having from about 1 to about 12 carbon atoms, preferably about 1 to 8 about carbon atoms, with the average number of carbon atoms being about 4 to about 12.

## Photoinitiator

Examples of photoinitiators which are useful include but are not limited to those selected from the group consisting of the benzoin ethers such as benzoin methyl ether and benzoin isopropyl ether; substituted benzoin ethers such as anisole methyl ether; substituted acetophenones such as 2,2'-diethoxyacetohenone and 2,2'-dimethoxy-2-phenylacetophenone; substituted alpha-ketols such as 2-methyl-2-hydroxypropiophenone; aromatic sulfonyl chlorides such as 2-naphthalene sulfonyl chloride; photoactive oximes such as 1-phenyl-1,1-propanedion-2-(o-ethoxycarbonyl)-oxime; and mixtures thereof.

## Organic Solvent

The coating composition of the invention may further comprise an optional solvent. Suitable solvents include but are not limited to those selected from the group consisting of esters such as ethyl acetate and butyl acetate, ketones such as methyl ethyl ketone, methyl propyl ketone and acetone, and mixtures thereof. Solvent is used if necessary in order to modify the viscosity of the composition for coating purposes. The coating composition can comprise about 0 to about 44 weight percent of an organic solvent, typically comprises about 1 to about 44 weight percent of an organic solvent, if used, based upon the total weight of the coating composition. Preferably the coating composition comprises about 0 to about 33 weight percent of a solvent.

## Optional Additives

Other useful materials which can be blended into the composition include, but are not limited to those selected from the group consisting of fillers, pigments, plasticizers, tackifiers, chain transfer agents, fibrous reinforcing agents, woven and nonwoven fabrics, foaming agents, antioxidants, stabilizers, fire retardants, viscosity adjusting agents, microspheres, and mixtures thereof.

The composition is preferably prepared by dissolving or dispersing the fluorocarbon elastomer into the multifunctional monomer, and then adding the photoinitiator. Optionally monofunctional acrylic monomer and/or an organic solvent are added to obtain a consistent and coatable syrup. The composition is coated onto a flexible carrier web and polymerized in an inert, i.e., oxygen free, atmosphere, e.g., a nitrogen atmosphere. A sufficiently inert atmosphere can be achieved by covering a layer of the photoactive coating with a plastic film which is substantially transparent to ultraviolet radiation, and irradiating through that film in decreased air using fluorescent-type ultraviolet lamps. If, instead of covering the polymerizable coating, the photopolymerization is to be carried out in an inert atmosphere, the permissible oxygen content of the inert atmosphere can be increased by mixing into the polymerizable monomer an oxidizable tin compound as taught in U.S. Patent No. 4,303,485 (Levens), which also teaches that such procedures will allow thick coatings to be polymerized in air. Useful oxidizable tin salts include but are not limited to those chosen from the group consisting of stannous octoate, stannous chloride, stannous oleaste, stannous naphthenate, stannous trifluoromethane sulfonate, stannous acetate, stannous stearate, stannous laurate and tributyltin hydride. When an oxidizable tin salt is used, stannous octoate is preferred (Levens, Col. 4, lines 46-59).

## TEST METHODS

### Gel Permeation Chromatography

The characterization of the molecular weight distribution of the polymers described herein is by conventional gel permeation chromatography (GPC).

A Hewlett-Packard Model 1084B, high performance liquid chromatograph equipped with STYRAGEL columns can be used. The system can be calibrated using polystyrene standards. All molecular weight averages are polystyrene equivalent molecular weights. The molecular weight averages and polydispersities are calculated according to accepted practices. GPC test methods are further explained in "Modern Size Exclusion Liquid Chromatograph" Practice of Gel Permeation Chromatography, John Wiley and Sons, 1979.

## EXAMPLES

All percentages, parts, ratios, etc. in the examples and the rest of the specification are by weight unless specifically stated otherwise. The following terminology, abbreviations, and tradenames are used herein.

| | |
|---|---|
| TMPTA: | Trimethylolpropane triacrylate |
| HDDA: | Hexanediol diacrylate |
| NPGDA: | Neopentylglycol diacrylate |
| TMPEOTA: | Trimethylolpropane ethoxy triacrylate |
| DIPMPPA: | Ditrimethylolpropane pentaacrylate |
| SR-259: | Polyethylene Glycol 200 Diacrylate, available from Sartomer Company, Inc. (contains 200 ethylene oxide units) |
| IRGACURE 184: | 1-Hydroxycyclohexyl phenyl ketone, available from Ciba-Geigy |
| PET: | Polyethylene terephthalate |

UV:     Ultraviolet light
PPT:     Precipitate formed
FLUOREL 2230: vinylidene fluoride hexaflurorpropylene copolymer, available from 3M Company
Min.:     minutes

Method of Testing Stain Resistance

The UV-curable acrylate/fluoroelastomer protective coating material to be tested is prepared by dissolving FLUOREL 2230 in methyl ethyl ketone, then adding multifunctional (meth)acrylate monomer, and photoinitiator. The resultant mixture is hand-coated, using a laboratory coater, onto PET film at the desired thickness. The coated film is subjected to 80 watt UV radiation on a moving platform at the rate of 6 m/min. under a nitrogen blanket. The coated film is removed and cut into strips for evaluation. The staining material is applied and allowed to stand, under a watch glass, for a prescribed time (indicated below), after which the affected area is cleaned with isopropyl alcohol. The amount of residual stain is rated on a scale of 1 (severe stain) to 5 (no visible stain). The staining test materials are:

KIWI Brown shoe polish (KIWI Brands, Inc.), allowed to stand overnight.

Iodine, commercially available 2% tincture of iodine, allowed to stand two hours.

Red stain in alcohol, a 2% solution of commercially available FD&C Red #40 dye in methyl alcohol, allowed to stand two hours.

Red stain in oil, a 1% solution of commercially available FD&C Red #40 dye in mineral oil, allowed to stand overnight.

Black stain in alcohol, pad stain 504-D5-1031, supplied by Akzo Reliance, allowed to stand two hours.

Mustard, commercially available French's mustard, applied directly, allowed to stand overnight.

Coal tar, applied directly, allowed to stand overnight. The area is cleaned with mineral spirits rather than isopropyl alcohol.

Stain ratings are quantified as:

1. Severe stain, stain area does not show difference before and after cleaning.

2. Strong mark, stain is slightly removed during cleaning.

3. Slight mark, stain is mostly removed during cleaning, but is still visible from several viewing directions.

4. Slight change in luster after cleaning, visible only when the light source is mirrored in the test surface on or near the mark and is reflected toward the observer's eye. Alternatively, a few isolated marks are just visible.

5. No visible change, no stain after cleaning.

Example 1

A 1000 ml wide mouth jar was charged with 378.4 g of FLUOREL 2230 copolymer and 410 g of methyl ethyl ketone, capped, and placed in a shaker for 8 hours to obtain a highly viscous opaque solution.

Example A

A solution of 18.0 g of the FLUOREL 2230 copolymer solution of Example 1, 1.0 g of TMPTA and 0.4 g of IRGACURE 184 (Ciba-Geigy) was coated onto a PET film. The coated film was subjected to UV radiation on a moving platform at the rate of 6 m/min. under a nitrogen blanket. The cured coated film was tested for stain resistance with the results shown in Table I.

Example B-M

The procedure of Example A was followed for each of Examples B-M. The components used in place of the Example A components are set forth in Table I. Test results are included in Table I.

## TABLE I

Formulations and Stain Resistance of Coatings of
Examples A-M

| Component* | A. | B. | C. | D. | E. | F. | G. | H. | I. | J. | K. | L. | M. |
|---|---|---|---|---|---|---|---|---|---|---|---|---|---|
| FLUOREL solution - Ex. 1 | 18 | 14 | 10 | 6 | 2 | 14 | 10 | 6 | 14 | 10 | 6 | 10 | 10 |
| TMPTA | 1 | 3 | 5 | 7 | 9 | | | | | | | | |
| HDDA | | | | | | 3 | 5 | 7 | | | | | |
| NPGDA | | | | | | | | | 3 | 5 | 7 | | |
| TMPEOTA | | | | | | | | | | | | 5 | |
| DIPMPPA | | | | | | | | | | | | | 5 |
| IRGACURE 184 | .4 | .4 | .4 | .4 | .4 | .4 | .4 | .4 | .4 | .4 | .4 | .4 | .4 |
| *in grams | | | | | | | | | | | | | |
| Stain Resistance | | | | | | | | | | | | | |
| Kiwi Brown | 1 | 1 | 3 | 3 | ppt. | 1 | 1 | 1 | 1 | 1 | 1 | 3 | 3 |
| Iodine | 5 | 5 | 5 | 3 | | 5 | 4 | 4 | 5 | 3 | 3 | 5 | 5 |
| Red (alcohol) | 3 | 5 | 5 | 4 | | 3 | 3 | 3 | 3 | 3 | 3 | 5 | 5 |
| Red (oil) | 5 | 5 | 5 | 5 | | 5 | 5 | 5 | 5 | 5 | 5 | 5 | 5 |
| Black (alcohol) | 4 | 5 | 5 | 5 | | 5 | 5 | 5 | 5 | 5 | 5 | 5 | 5 |
| Mustard | 5 | 5 | 5 | 5 | | 5 | 5 | 5 | 5 | 5 | 5 | 5 | 5 |
| Coal Tar | 5 | 5 | 5 | 5 | | 5 | 5 | 5 | 5 | 5 | 5 | 5 | 5 |

Various modification and alterations of this invention will become apparent to those skilled in the art without departing from the scope and spirit of this invention, and should be understood that this invention is not to be unduly limited to the illustrated embodiments set forth herein.

**Claims**

1. A stain-resistant protective coating composition comprising:
   (a) about 50 to about 5 weight percent of acrylic monomer having at least 2 ethylenically unsaturated groups;
   (b) about 5 to about 50 weight percent of a fluorocarbon elastomer having a number average molecular weight of about 3,000 to about 150,000;
   (c) about 1 to about 5 weight percent of a photoinitiator; and
   (d) about 0 to about 44 weight percent of an organic solvent in which said fluorocarbon elastomer and acrylic monomer is soluble;
   wherein said weight percentages are based upon the total weight of said stain-resistant protective coating composition.

2. The coating composition of claim 1 wherein said fluorocarbon elastomer is selected from the group consisting of fluorocarbon elastomers comprising monomers selected from the group consisting of vinylidene fluoride, hexafluoropropylene, tetrafluoroethylene, chlorotrifluoroethylene, 2-chloropenta-fluoropropene, pentafluoropropene, dichlorodifluoroethylene, trifluoroethylene, 1-1-chlorofluoroethylene, 1-bromo-2,2-difluoroethylene, perfluoromethylvinyl ether, 3-iodoperfluoropropene, 4-iodoperfluoropentene, bromotrifluoroethylene, bromodifluoroethylene, and mixtures thereof.

3. The stain-resistant protective coating composition of claim 1 wherein said acrylic monomer having at least 2 ethylenically unsaturated groups is selected from the group consisting of trimethylolpropane triacrylate; hexanediol diacrylate; neopentylglycol diacrylate; trimethylolpropane ethoxy triacrylate; ditrimethylolpropane pentacrylate; polyethylene glycol 200 diacrylate; 1,4-butanediol dimethacrylate, 1,3-butanediol dimethacrylate, polyglycol 400 dimethacrylate, neopentyl glycol dimethacrylate, triethylene glycol dimethacrylate, ethylene glycol dimethacrylate, diethylene glycol dimethacrylate, tetraethylene glycol dimethacrylate, 1,12-dodecanediol dimethacrylate, and mixtures thereof.

4. The stain-resistant protective coating composition of claim 1 which further comprises about 5 to about 50 weight percent of monofunctional acrylic monomer based upon the total weight of said fluorocarbon elastomer, plus said acrylic monomer having at least 2 ethylenically unsaturated groups, plus said monofunctional acrylic monomer.

5. A stain-resistant protective coating composition comprising:
   (a) about 30 to about 35 weight percent of acrylic monomer having at least 2 ethylenically unsaturated groups;
   (b) about 35 to about 30 weight percent of a fluorocarbon elastomer having a number average molecular weight of about 3,000 to about 150,000;
   (c) about 2 to about 3 weight percent of a photoinitiator; and
   (d) about 0 to about 33 weight percent of an organic solvent in which said fluorocarbon elastomer is soluble;
   wherein said weight percentages are based upon the total weight of said protective coating composition.

6. The stain-resistant protective coating of claim 5 which further comprises a monofunctional acrylic monomer selected from the group consisting of methyl methacrylate, butyl acrylate, isobornyl acrylate, styrene, hydroxyethyl methacrylate, acrylic acid, methacrylic acid, and mixtures thereof.

7. A stain-resistant protective coating comprising the cured composition of claim 1.

8. A stain resistant protective coating comprising the cured composition of claim 5.

9. A vinyl substrate coated with the protective coating of claim 7.

10. A vinyl substrate coated with the protective coating of claim 8.

**European Patent Office**

# EUROPEAN SEARCH REPORT

Application Number

EP 93 40 1118

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 428 133 (DAIKIN INDUSTRIES) * the whole document * | 1-10 | C09D4/06 C08F259/08 |
| D,X | US-A-3 676 192 (HAHN) *abstract* | 1-10 | |
| X | EP-A-0 161 581 (BAYER) * claims 1-5 * | 1-10 | |
| X | US-A-3 894 118 (ARONOFF ET AL.) * claims 1-11 * | 1-5 | |

TECHNICAL FIELDS SEARCHED (Int. Cl.5)

C08F
C09D
C09J

The present search report has been drawn up for all claims

| Place of search | Date of completion of the search | Examiner |
|---|---|---|
| THE HAGUE | 30 AUGUST 1993 | ANDRIOLLO G.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)